# FASCICULE DE BREVET EUROPEEN

(11) **EP 3 546 792 B1**
(45) Date de publication et mention de la délivrance du brevet: **06.01.2021**
(21) Numéro de dépôt: 19165314.6
(22) Date de dépôt: 26.03.2019
(51) Int. Cl.: F16H 3/34, B64C 25/40

(54) **PROCEDE D'ENGAGEMENT DE DEUX ELEMENTS ENGRENAGE ET DISPOSITIF D'ENTRAINEMENT METTANT EN OEUVRE UN TEL PROCEDE**
VERFAHREN ZUM EINGRIFF ZWEIER ZAHNRÄDER UND ANTRIEBSVORRICHTUNG ZUR DURCHFÜHRUNG EINES DERARTIGEN VERFAHRENS
A METHOD OF ENGAGING TWO GEAR ELEMENTS, AND A DRIVE DEVICE IMPLEMENTING SUCH A METHOD

(30) Priorité: 28.03.2018 FR 1852678
(43) Date de publication de la demande: 02.10.2019
(73) Titulaire: Safran Landing Systems, 78140 Vélizy-Villacoublay (FR)
(72) Inventeur: FRAIM, Julien, 77550 MOISSY-CRAMAYEL (FR); GIRAUD, Frédérik, 77550 MOISSY-CRAMAYEL (FR); MARTIN, Frédéric, 77550 MOISSY-CRAMAYEL (FR); VEILLON, Alexandre, 77550 MOISSY-CRAMAYEL (FR)
(74) Mandataire: Lavialle, Bruno François Stéphane

(56) Documents cités:
- FR-A1- 2 901 334
- US-A1- 2012 145 504
- US-A1- 2017 101 173
- US-A1- 2017 211 690

## Description

La présente invention concerne le domaine de la transmission motorisée de mouvements et plus particulièrement un procédé d'engagement de deux éléments engrenage. L'invention concerne également un dispositif d'entraînement notamment bien que non exclusivement d'une roue d'aéronef mettant en œuvre un tel procédé.

### ARRIERE-PLAN TECHNOLOGIQUE DE L'INVENTION

Dans le domaine de l'aviation, il est désormais prévu d'équiper les aéronefs d'organes d'entraînement en rotation des roues pour permettre le déplacement au sol de l'aéronef sans utiliser ses groupes motopropulseurs. Des organes d'entraînement montés sur un train d'atterrissage sont décrits dans les documents WO 2011/ 023505 et WO 2015/033160. Ces organes d'entraînement comportent un moteur électrique relié à un réducteur dont la sortie est équipée d'un pignon pouvant être à rouleaux. Le pignon coopère avec une couronne dentée solidaire de la roue d'aéronef. De cette manière, le moteur électrique entraîne en rotation le pignon, qui entraîne à son tour la couronne dentée et donc la roue pour déplacer l'aéronef.

Pour des questions de sécurité, il est prévu, notamment au décollage et à l'atterrissage de l'aéronef, de désolidariser le pignon de la couronne dentée. Pour cela, des moyens d'actionnement assurent le déplacement du pignon entre une position de dégagement dans laquelle le pignon est éloigné de la couronne dentée, et une position d'engrènement dans laquelle le pignon entraîne en rotation ladite couronne.

Toutefois, lors de l'engagement du pignon en rotation sur la couronne, une portion périphérique d'au moins un des rouleaux dudit pignon vient taper sur des portions supérieures de dents de la couronne, ce qui engendre des efforts ponctuels importants remontant dans l'ensemble des organes d'entraînement mais aussi dans la structure du train d'atterrissage de l'aéronef. Pour éviter toute dégradation de ces organes d'entraînement (comme par exemple la rupture d'une dent de la couronne ou bien encore le dysfonctionnement d'un rouleau du pignon), lesdits organes sont généralement surdimensionnés, ce qui entraîne une augmentation de la masse et donc du coût desdits organes.

Le document US 2017/101173 A divulgue un système de commande de train d'atterrissage d'aéronef, dans lequel un pignon à rouleaux est entraîné en rotation par un moteur électrique et un actionneur déplace le pignon entre une position de désengagement et une d'engagement avec une couronne dentée. Pour limiter les impacts entre pignon et couronne, on contrôle le couple du moteur électrique lors de l'engagement.

### OBJET DE L'INVENTION

L'invention a donc pour objet de proposer un moyen pour limiter les efforts remontant à travers deux engrenages lors de leur accouplement, et d'obvier au moins en partie aux inconvénients précités.

### PRESENTATION DE L'INVENTION

A cet effet, l'invention propose un procédé d'engagement d'un premier élément d'engrenage avec un deuxième élément d'engrenage, au moins le deuxième élément d'engrenage étant monté mobile entre une position d'engrènement et une position de dégagement à l'aide d'un actionneur.

Selon l'invention, le procédé d'engagement comporte l'étape d'entraîner au moins l'un des éléments d'engrenage en rotation pour ménager un écart de vitesse de rotation non nul entre lesdits éléments d'engrenage. Le procédé comporte également l'étape de commander l'actionneur pour successivement :
- déplacer au moins le deuxième élément d'engrenage vers la position d'engrènement,
- quand est détectée un contact entre les éléments d'engrenage, stopper le déplacement du deuxième élément d'engrenage,
- quand est détectée une position angulaire idéale d'engagement desdits éléments d'engrenage, déplacer le deuxième élément d'engrenage le plus rapidement possible jusqu'à la position d'engrènement.

Arrêter le déplacement du deuxième élément d'engrenage dès la détection d'un contact permet de limiter l'effort de contact entre les deux éléments d'engrenage en attendant que lesdits éléments soient en phase pour amener le deuxième élément d'engrenage dans la position d'engrènement.

Selon un mode de réalisation préféré de l'invention, l'actionneur comprend un vérin ayant une tige pilotée par une servovalve et reliée au deuxième élément d'engrenage. Ainsi :
- une augmentation du débit dans la servovalve permet d'atteindre une pression prédéterminée et de déplacer la tige du vérin vers la position d'engrènement,
- une montée de pression jusqu'à un premier seuil permet la détection du contact entre les éléments d'engrenage, une modification du débit de la servovalve permettant alors de stopper le déplacement de la tige du vérin,
- une baisse de pression jusqu'à un deuxième seuil pendant une durée prédéfinie permet de détecter une position angulaire idéale d'engagement des éléments d'engrenage, une augmentation du débit dans la servovalve jusqu'à un débit maximum permettant alors d'amener la tige du vérin jusqu'à la position d'engrènement.

Selon une caractéristique particulière, le premier seuil de pression est sensiblement égal à 30 bars.

Selon une autre caractéristique particulière, le deuxième seuil de pression est sensiblement égal à 20 bars.

De manière particulière, la durée prédéfinie du deuxième seuil de pression est sensiblement égale à 100 millisecondes.

L'invention concerne également un dispositif d'entraînement comprenant :
- un premier élément d'engrenage,
- un deuxième élément d'engrenage mobile entre une position d'engrènement avec le premier élément d'engrenage et une position de dégagement à l'aide d'un actionneur,
- un moteur entraînant en rotation l'un des éléments d'engrenage,
- des moyens de détection d'un contact entre lesdits éléments d'engrenage,
- une unité électronique de commande reliée à l'actionneur, au moteur et aux moyens de détection.

Selon l'invention, l'unité électronique de commande est agencée pour mettre en œuvre le procédé précédent.

Selon un mode de réalisation préféré de l'invention, l'actionneur comprend un vérin ayant une tige reliée au deuxième élément d'engrenage, une servovalve pilote le vérin et les moyens de détection comportent un capteur de pression.

Selon une caractéristique particulière, le vérin est un vérin hydraulique.

Selon une autre caractéristique particulière, le moteur est un moteur électrique.

Selon un mode de réalisation préféré de l'invention, le premier élément d'engrenage est une couronne dentée et le deuxième élément d'engrenage est un pignon à rouleaux.

De manière particulière, la couronne dentée est solidaire d'une roue.

L'invention concerne aussi un train d'atterrissage équipé d'un tel dispositif.

### DESCRIPTION DES FIGURES

L'invention sera mieux comprise à la lumière de la description qui suit, laquelle est purement illustrative et non limitative, et doit être lue en regard des figures annexées, parmi lesquelles :
- la figure 1 représente schématiquement un dispositif d'entraînement selon un mode de réalisation particulier de l'invention, le deuxième engrenage étant dans la position de dégagement,
- la figure 2a est une vue partielle du dispositif illustré à la figure 1 dans laquelle le premier élément d'engrenage et le deuxième élément d'engrenage sont en contact, le deuxième élément d'engrenage étant entre la position de dégagement et la position d'engrènement,
- la figure 2b est une vue partielle du dispositif illustré à la figure 1 dans laquelle le deuxième élément d'engrenage est dans la position d'engrènement,
- la figure 3 représente schématiquement le procédé de l'invention,
- la figure 4 représente au cours du temps le déplacement de la tige du vérin et la pression régnant à l'intérieur du vérin lors de la mise en œuvre du procédé de l'invention illustré à la figure 3.

### DESCRIPTION DETAILLEE D'UN MODE DE REALISATION PARTICULIER DE L'INVENTION

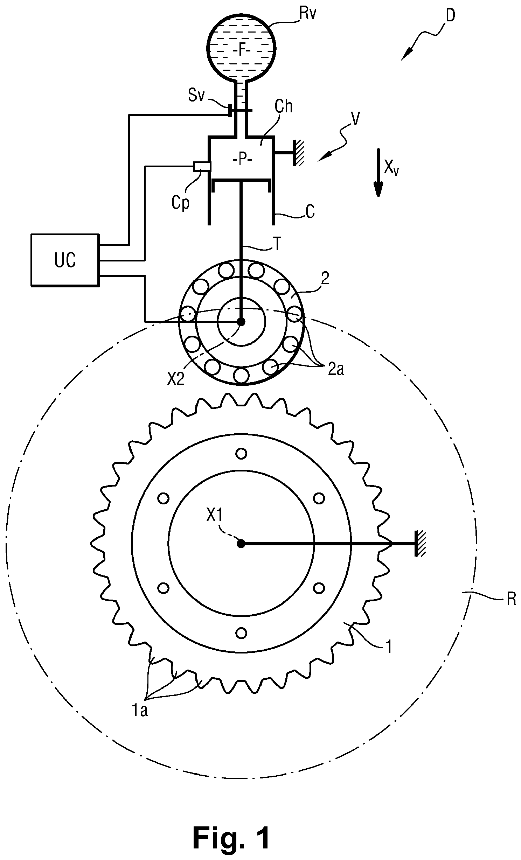

En référence à la figure 1, un train d'atterrissage d'un aéronef est équipé d'un dispositif d'entraînement D selon un mode de réalisation particulier de l'invention. Le train d'atterrissage comprend une jambe comportant un caisson pourvu de moyens de sa liaison à la structure de l'aéronef et une tige coulissant dans le caisson et ayant une extrémité libre pourvue d'un moyeu d'une roue R.

Le dispositif d'entraînement D comporte une couronne 1 dentée comprenant une rangée de dents la. La couronne 1 forme un premier élément d'engrenage solidaire de la roue R de l'aéronef, la couronne 1 et la roue R ayant un même axe de rotation X1.

Le dispositif d'entraînement D comporte également un pignon 2 comprenant une pluralité de rouleaux 2a équitablement répartis autour d'un axe de rotation X2 qui est parallèle à l'axe de rotation X1. Le pignon 2 à rouleaux 2a forme un deuxième élément d'engrenage solidaire d'un arbre de sortie d'un réducteur associé à un moteur électrique.

Le pignon 2 est relié au niveau de l'axe de rotation X2 à une extrémité libre d'une tige T d'un vérin V hydraulique. Le vérin V comporte un corps C solidaire du train d'atterrissage et à l'intérieur duquel peut se déplacer la tige T suivant un axe Xv orthogonal aux axes de rotation X1, X2. Une extrémité de la tige T formant piston délimite avec le corps C du vérin une chambre Ch. La chambre Ch est raccordée via une servovalve Sv à un réservoir Rv contenant un fluide F sous pression. La servovalve Sv permet de réguler une pression P à l'intérieur de la chambre Ch du vérin V, soit un déplacement Dp de la tige T.

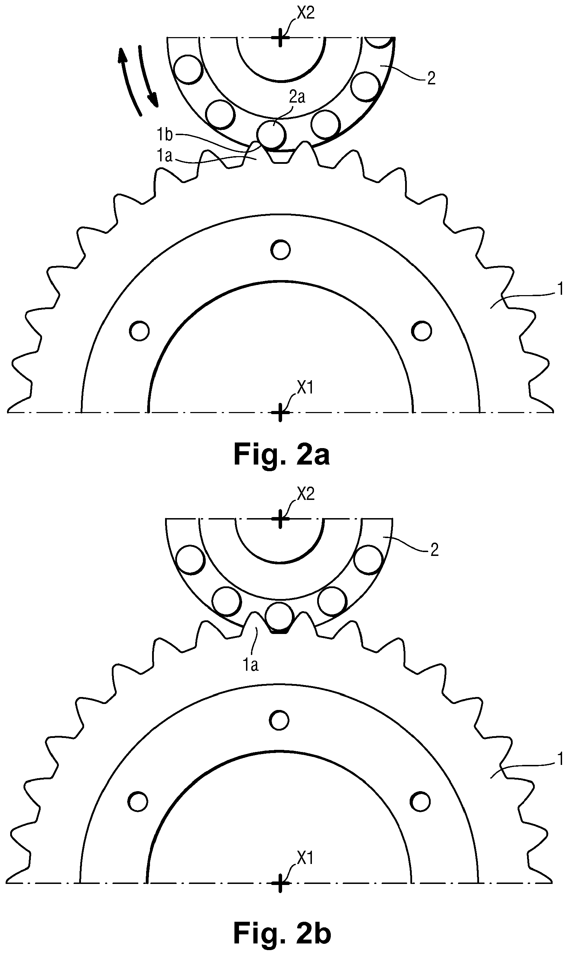

Le pignon 2 est ainsi montée mobile entre une position de dégagement illustrée à la figure 1 dans laquelle le pignon 2 est éloigné de la couronne 1, et une position d'engrènement illustrée à la figure 2b dans laquelle le pignon 2 est en phase avec la couronne 1 pour engrener celle-ci.

Une unité électronique de commande UC est reliée à la servovalve Sv, au moteur électrique et à un capteur de pression Cp traversant de manière étanche le corps C du vérin V pour mesurer la pression P à l'intérieur de la chambre Ch du vérin V.

Le procédé d'engagement du pignon 2 avec la couronne 1 va maintenant être détaillé.

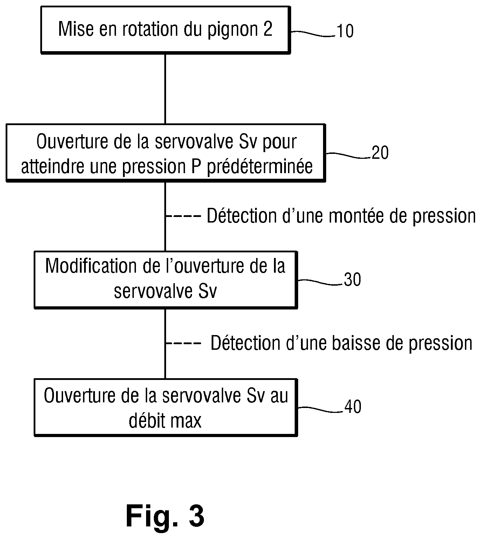

Comme illustré à la figure 3, une première étape 10 consiste en ce que l'unité de commande UC contrôle le moteur électrique pour entraîner en rotation le pignon 2 de façon à ménager un écart de vitesse non nul entre ledit pignon 2 et la couronne 1. L'écart de vitesse est préférentiellement supérieur à 3 rpm (rotation par minute) pour éviter qu'un rouleau 2a du pignon 2 soit en permanence en face d'une dent la de la couronne 1. Cet écart correspond sensiblement à la somme en valeur absolue des imprécisions sur les mesures et les commandes de vitesses de rotation du pignon et de la couronne. Il peut aussi être préférable de limiter cet écart de vitesse ou bien encore le couple délivré par le moteur électrique pour minimiser les efforts au moment du contact entre la couronne 1 et le pignon 2. Cette limitation peut notamment être déterminée en fonction du design du pignon et de la couronne ou bien encore des performances recherchées du dispositif d'entraînement. Ainsi, un écart de vitesse sensiblement égale à 4rpm est préféré.

Lors d'une deuxième étape 20, le débit de la servovalve Sv est augmenté par l'unité de commande UC pour atteindre dans la chambre Ch du vérin V une pression P suffisante pour déplacer la tige T du vérin V. Le pignon 2 se déplace alors à une vitesse sensiblement constante vers la position d'engrènement jusqu'à ce que l'un des rouleaux 2a du pignon 2 rentre en contact avec une portion supérieure 1b d'une dent la de la couronne 1 (figure 2a). L'écart de vitesse entre le pignon 2 et la couronne 1 étant non nul, le rouleau glisse alors le long de la portion supérieure 1b de la dent la.

Dès lors, l'unité de commande UC détecte via le capteur de pression une montée de pression de la chambre Ch du vérin V provoquée par le contact entre le pignon 2 et la couronne 1 qui contraint le déplacement Dp de la tige T. Lorsque la montée de pression est supérieure à un premier seuil S1, l'unité de commande UC modifie, lors d'une troisième étape 30, le débit de la servovalve Sv de façon à stopper l'avancement de la tige T vers la position d'engrènement. La troisième étape 30 permet ainsi de limiter les efforts de contact entre le pignon et la couronne, et par conséquent de limiter les remontées d'effort dans les différents éléments du dispositif et de la structure du train d'atterrissage. De préférence, le premier seuil S1 est sensiblement égal à 30 bars. Cette valeur peut notamment être définie en fonction de la pression nécessaire au déplacement de la tige T du vérin V qui dépend entre autre de la vitesse de déplacement souhaitée et du design du vérin V (frottements entre la tige T et la chambre Ch du vérin V, ...).

A cet effet, une remontée et une descente du rouleau 2a le long de la portion supérieure 1b de la dent engendre alors respectivement une montée et une baisse de la pression P à l'intérieur de la chambre Ch du vérin V.

Dès lors, la pression à l'intérieur de la chambre Ch du vérin V oscille avec des amplitudes supérieures au premier seuil S1.

L'avancement de la tige étant limité par le débit de la servovalve et la rotation relative se poursuivant, le rouleau 2a finit donc par ne plus être en contact avec la dent et se trouve entre deux dents. Dans le même temps, la pression à l'intérieur de la chambre arrête alors d'osciller et diminue jusqu'à un deuxième seuil S2. De préférence, le deuxième seuil S2 est sensiblement égal à 20 bars.

L'unité de commande détecte alors, via le capteur de pression Cp, une baisse de pression P à l'intérieur de la chambre Ch du vérin V jusqu'au deuxième seuil S2. Si la pression reste inférieure au deuxième seuil S2 pendant une durée t prédéfinie, le débit de la servovalve est alors, lors d'une quatrième étape 40, augmenté jusqu'à un débit maximum de façon à déplacer rapidement la tige vers la position d'engrènement. De préférence, la durée t est sensiblement égale à 100ms.

Le pignon 2 étant alors sensiblement en phase avec la couronne 1, le déplacement Dp rapide de la tige T du vérin V permet au pignon 2 d'atteindre la position d'engrènement. Dès lors, la pression P à l'intérieur de la chambre du vérin V augmente jusqu'à atteindre sensiblement la pression du fluide F contenu dans le réservoir Rv.

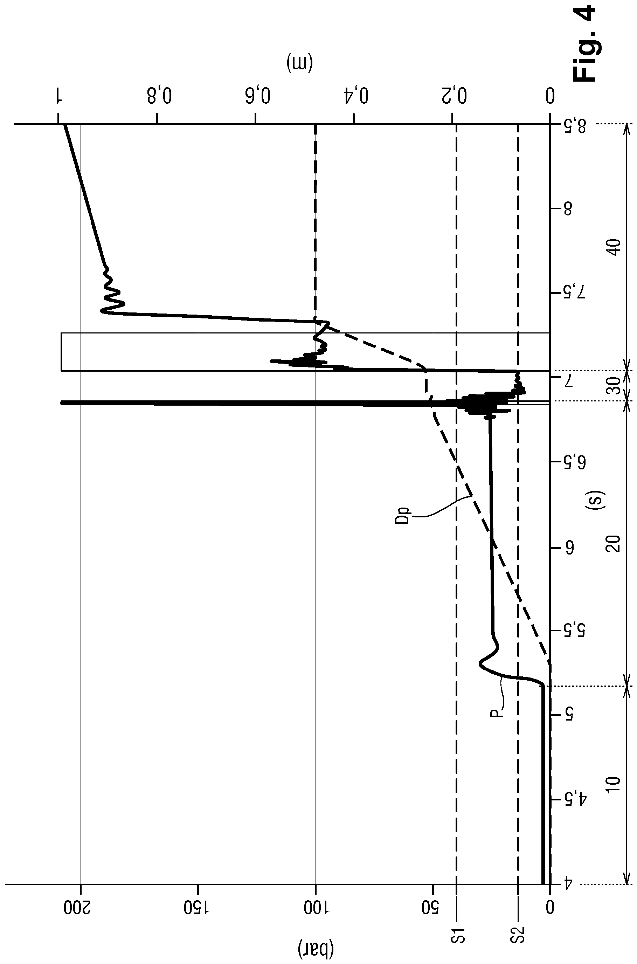

La figure 4 illustre le déplacement Dp de la tige T du vérin V entre la position de dégagement et la position d'engrènement ainsi que l'évolution de la pression P à l'intérieur de la chambre Ch du vérin V au cours des étapes 10, 20, 30, 40.

Il est également possible de déterminer la position angulaire idéale d'engagement du pignon 2 avec la couronne 1 en calculant le moment où ledit pignon et ladite couronne 1 sont sensiblement en phase après qu'un contact ait été détecté entre eux. Différents paramètres sont alors à prendre en compte : dimensions et espacement des dents la de la couronne 1, vitesse de rotation du pignon 2 par rapport à la couronne 1, position du point d'impact du rouleau 2a sur la dent la, etc...

L'inconvénient de ce type de détermination de la position angulaire idéale est que l'exactitude du calcul dépend directement de la position du point d'impact du rouleau 2a sur la dent la, laquelle est purement hypothétique dans ce cas.

Bien entendu, l'invention n'est pas limitée au mode de réalisation décrit mais englobe toute variante entrant dans le champ de l'invention telle que définie par les revendications.

La position du pignon 2 et de la couronne 1 dans le dispositif d'entraînement D peut notamment être inversée.

Bien qu'ici le deuxième élément d'engrenage soit un pignon à rouleaux, un autre type de pignon peut être envisagé comme par exemple un pignon équipé de dents.

Bien qu'ici le mouvement pour engager le pignon avec la couronne soit un mouvement de translation, un mouvement de rotation peut aussi être envisagé.

L'axe Xv suivant lequel se déplace la tige T du vérin V peut ne pas être orthogonal à l'axe de rotation X1 de la couronne dentée.

De même, si l'engagement entre le pignon et la couronne est ici radial, il peut très bien être axial ou tangentiel (cas notamment des engrenages coniques).

Bien que le vérin V soit ici hydraulique, l'utilisation d'un vérin pneumatique associé à une électrovanne est tout aussi envisageable pour un fonctionnement similaire au mode de réalisation décrit.

Il est également possible de remplacer le vérin V et la servovalve Sv par un actionneur électromécanique, comme par exemple un moteur électrique associé à une chaîne mécanique reliée au pignon. Le blocage du moteur en position ou en vitesse nulle permet alors de stopper le déplacement du pignon. La détection du contact entre le pignon et la couronne peut alors être réalisée en utilisant par exemple des capteurs d'effort agencés dans ladite chaîne mécanique (ponts de jauge) ou bien encore en observant une variation de la puissance électrique délivrée par le moteur (une rotation du moteur va apparaître au moment du contact et impliquer une augmentation du couple nécessaire et donc du courant).

La détection du contact entre le pignon et la couronne peut aussi être réalisée en mesurant la déformation du pignon, notamment via un laser.

Une autre solution est de mesurer directement le déplacement du pignon et d'observer un ralentissement ou un arrêt dudit déplacement en amont de la position d'engrènement via par exemple un capteur de position.

Afin d'éviter la détection de faux contact entre le pignon et la couronne, la détection d'une augmentation ou d'une baisse de pression peut être conditionnée par le déplacement Dp de la tige T du vérin V, via notamment un capteur de position de la tige du vérin.

Le capteur de pression Cp peut être agencé ailleurs que sur le corps du vérin, comme par exemple sur le circuit hydraulique reliant le vérin V au réservoir Rv.

## Revendications

1. Procédé d'engagement d'un premier élément d'engrenage (1) avec un deuxième élément d'engrenage (2), au moins le deuxième élément d'engrenage (2) étant monté mobile entre une position d'engrènement et une position de dégagement à l'aide d'un actionneur (V), le procédé d'engagement comportant l'étape d'entraîner au moins l'un des éléments d'engrenage en rotation pour ménager un écart de vitesse de rotation non nul entre lesdits éléments d'engrenage et l'étape de commander l'actionneur (V) pour successivement :
- déplacer au moins le deuxième élément d'engrenage vers la position d'engrènement,
- quand est détectée un contact entre les éléments d'engrenage, stopper le déplacement du deuxième élément d'engrenage,
- quand est détectée une position angulaire idéale d'engagement desdits éléments d'engrenage, déplacer le deuxième élément d'engrenage le plus rapidement possible jusqu'à la position d'engrènement.

2. Procédé d'engagement selon la revendication 1, dans lequel l'actionneur comprend un vérin (V) ayant une tige (T) pilotée par une servovalve (Sv) et reliée au deuxième élément d'engrenage, et dans lequel :
- une augmentation du débit dans la servovalve (Sv) permet d'atteindre une pression prédéterminée et de déplacer la tige (T) du vérin (V) vers la position d'engrènement,
- une montée de pression jusqu'à un premier seuil (S1) permet la détection du contact entre les éléments d'engrenage, une modification du débit de la servovalve (Sv) permettant alors de stopper le déplacement (Dp) de la tige (T) du vérin (V),
- une baisse de pression jusqu'à un deuxième seuil (S2) pendant une durée prédéfinie (t) permet de détecter une position angulaire idéale d'engagement des éléments d'engrenage, une augmentation du débit dans la servovalve jusqu'à un débit maximum permettant alors d'amener la tige (T) du vérin (V) jusqu'à la position d'engrènement.

3. Procédé d'engagement selon la revendication 2, dans lequel le premier seuil (S1) de pression est sensiblement égal à 30 bars.

4. Procédé d'engagement selon la revendication 2, dans lequel le deuxième seuil (S2) de pression est sensiblement égal à 20 bars.

5. Procédé d'engagement selon la revendication 2, dans lequel la durée prédéfinie (t) est sensiblement égale à 100 millisecondes.

6. Dispositif d'entraînement, comprenant un premier élément d'engrenage (1), un deuxième élément d'engrenage (2) mobile entre une position d'engrènement avec le premier élément d'engrenage et une position de dégagement à l'aide d'un actionneur (V), un moteur entraînant en rotation l'un des éléments d'engrenage, des moyens de détection (Cp) d'un contact entre lesdits éléments d'engrenage, et une unité électronique de commande (UC) reliée à l'actionneur (V), au moteur et aux moyens de détection (Cp), **caractérisé en ce que** l'unité électronique de commande (UC) est agencée pour mettre en œuvre le procédé selon l'une des revendications précédentes.

7. Dispositif d'entraînement selon la revendication 6, dans lequel l'actionneur comprend un vérin (V) ayant une tige (T) reliée au deuxième élément d'engrenage, une servovalve (Sv) pilote le vérin (V) et les moyens de détection comportent un capteur de pression (Cp).

8. Dispositif d'entraînement selon la revendication 7, dans lequel le vérin (V) est un vérin hydraulique.

9. Dispositif d'entraînement selon la revendication 7, dans lequel le moteur est un moteur électrique.

10. Dispositif d'entraînement selon l'une quelconque des revendications 6 à 9, dans lequel le premier élément d'engrenage (1) est une couronne dentée et le deuxième élément d'engrenage (2) est un pignon à rouleaux.

11. Dispositif d'entraînement selon la revendication 10, dans lequel la couronne dentée (1) est solidaire d'une roue (R).

12. Train d'atterrissage équipé d'un dispositif d'entraînement selon l'une des revendications 7 à 11.

## Patentansprüche

1. Eingriffsverfahren zum Eingriff eines ersten Getriebeelements (1) in ein zweites Getriebeelement (2), wobei mindestens das zweite Getriebeelement (2) mit Hilfe eines Aktors (V) beweglich zwischen einer eingerückten Stellung und einer ausgerückten Stellung gelagert ist, wobei das Eingriffsverfahren den Schritt des Antreibens mindestens eines der Getriebeelemente in Drehung umfasst, um einen Nicht-Null-Drehgeschwindigkeitsunterschied zwischen den genannten Getriebeelementen herzustellen, sowie den Schritt des Steuerns des Aktors (V) um nacheinander:
- mindestens das zweite Getriebeelement in die eingerückte Stellung zu bewegen,
- wenn ein Kontakt zwischen den Getriebeelementen erfasst wird, die Bewegung des zweiten Getriebeelements zu stoppen,
- wenn eine ideale Winkelstellung für den Eingriff der genannten Getriebeelemente erfasst wird, das zweite Getriebeelement schnellstmöglich bis in die eingerückte Stellung zu bewegen.

2. Eingriffsverfahren nach Anspruch 1, bei dem der Aktor einen Zylinder (V) umfasst, der eine Stange (T) hat, die von einem Servoventil (Sv) gesteuert wird und mit dem zweiten Getriebeelement verbunden ist, und bei dem:
- eine Erhöhung der Durchflussrate in dem Servoventil (Sv) ein Erreichen eines vorbestimmten Druckes und ein Verschieben der Stange (T) des Zylinders (V) in Richtung der eingerückten Stellung ermöglicht,
- ein Druckanstieg bis zu einem ersten Schwellenwert (S1) die Erfassung des Kontakts zwischen den Getriebeelementen ermöglicht, wobei eine Modifikation der Durchflussrate des Servoventils (Sv) dann ein Stoppen der Bewegung (Dp) der Stange (T) des Zylinders (V) ermöglicht,
- ein Druckabfall bis zu einem zweiten Schwellenwert (S2) während einer vordefinierten Dauer (t) ein Erfassen einer idealen Winkelstellung für den Eingriff der Getriebeelemente ermöglicht, wobei eine Erhöhung der Durchflussrate in dem Servoventil bis zur maximalen Durchflussrate dann ein Bringen der Stange (T) des Zylinders (V) bis in die eingerückte Stellung ermöglicht.

3. Eingriffsverfahren nach Anspruch 2, bei dem der erste Druckschwellenwert (S1) im Wesentlichen gleich 30 bar ist.

4. Eingriffsverfahren nach Anspruch 2, bei dem der zweite Druckschwellenwert (S2) im Wesentlichen gleich 20 bar ist.

5. Eingriffsverfahren nach Anspruch 2, bei dem die vordefinierte Dauer (t) im Wesentlichen gleich 100 Millisekunden ist.

6. Antriebsvorrichtung, umfassend ein erstes Getriebeelement (1), ein zweites Getriebeelement (2), das mit Hilfe eines Aktors beweglich zwischen einer in das erste Getriebeelement eingerückten Stellung und einer ausgerückten Stellung gelagert ist, einen Motor, der eines der Getriebeelemente in Drehung antreibt, Erfassungsmittel (Cp) zum Erfassen eines Kontaktes zwischen den genannten Getriebeelementen und eine elektronische Steuereinheit (UC), die mit dem Aktor (V), dem Motor und den Erfassungsmitteln (Cp) verbunden ist, **dadurch gekennzeichnet, dass** die elektronische Steuereinheit (UC) so ausgebildet ist, dass sie das Verfahren nach einem der vorhergehenden Ansprüche durchführt.

7. Antriebsvorrichtung nach Anspruch 6, bei der der Aktor einen Zylinder (V) umfasst, der eine Stange (T) hat, die mit dem zweiten Getriebeelement verbunden ist, ein Servoventil (Sv) den Zylinder (V) steuert und die Erfassungsmittel einen Drucksensor (Cp) umfassen.

8. Antriebsvorrichtung nach Anspruch 7, bei der der Zylinder (V) ein Hydraulikzylinder ist.

9. Antriebsvorrichtung nach Anspruch 7, bei der der Motor ein Elektromotor ist.

10. Antriebsvorrichtung nach einem der Ansprüche 6 bis 9, bei der das erste Getriebeelement (1) ein Zahnkranz und das zweite Getriebeelement (2) ein Rollen-Ritzel ist.

11. Antriebsvorrichtung nach Anspruch 10, bei der der Zahnkranz (1) fest mit einem Rad (R) verbunden ist.

12. Fahrwerk, das mit einer Antriebsvorrichtung nach einem der Ansprüche 7 bis 11 ausgestattet ist.

## Claims

1. An engagement method for engaging a first gear element (1) with a second gear element (2), at least the second gear element (2) being mounted to move between a meshing position and a disengaged position by means of an actuator (V), the engagement method including a step of driving at least one of the gear elements in rotation so as to establish a non-zero difference in speed of rotation between said gear elements, and a step of controlling the actuator (V) to perform the following in succession:
- moving at least the second gear element towards the meshing position;
- on detecting contact between the gear elements, stopping the movement of the second gear element; and
- on detecting an ideal angular position for engaging said gear elements, moving the second gear element as quickly as possible into the meshing position.

2. An engagement method according to claim 1, wherein the actuator comprises an actuator (V) having a rod (T) controlled by a servovalve (Sv) and connected to the second gear element, and wherein:
- increasing the flow rate through the servovalve (Sv) makes it possible to reach a predetermined pressure and to move the rod (T) of the actuator (V) towards the meshing position;
- raising the pressure up to a first threshold (S1) enables contact between the gear elements to be detected, and changing the flow rate through the servovalve (Sv) then enables the movement (Dp) of the rod (T) of the actuator (V) to be stopped; and
- lowering the pressure down to a second threshold (S2) for a predefined duration (t) serves to detect an ideal angular position for engaging the gear elements, and increasing the flow rate through the servovalve up to a maximum flow rate then serves to bring the rod (T) of the actuator (V) into the meshing position.

3. An engagement method according to claim 2, wherein the first pressure threshold (S1) is substantially equal to 30 bars.

4. An engagement method according to claim 2, wherein the second pressure threshold (S2) is substantially equal to 20 bars.

5. An engagement method according to claim 2, wherein the predefined duration (t) is substantially equal to 100 ms.

6. A drive device comprising a first gear element (1), a second gear element (2) movable by means of an actuator (V) between a meshing position with the first gear element and a disengaged position, a motor driving one of the gear elements in rotation, detector means (Cp) for detecting contact between said gear elements, and an electronic control unit (UC) connected to the actuator (V), to the motor, and to the detection means (Cp), the drive device being **characterized in that** the electronic control unit (UC) is arranged to perform the method according to any preceding claim.

7. A drive device according to claim 6, wherein the actuator comprises an actuator (V) having a rod (T) connected to the second gear element, a servovalve (Sv) controls the actuator (V), and the detector means comprise a pressure sensor (Cp).

8. A drive device according to claim 7, wherein the actuator (V) is a hydraulic actuator.

9. A drive device according to claim 7, wherein the motor is an electric motor.

10. A drive device according to any one of claims 6 to 9, wherein the first gear element (1) is a toothed ring and the second gear element (2) is a roller pinion.

11. A drive device according to claim 10, wherein the toothed ring (1) is secured to a wheel (R).

12. An undercarriage fitted with a drive device according to any one of claims 7 to 11.
